# EUROPÄISCHE PATENTSCHRIFT

(11) **EP 2 509 897 B1**
(45) Veröffentlichungstag und Bekanntmachung des Hinweises auf die Patenterteilung: **28.08.2013**
(21) Anmeldenummer: 10781609.2
(22) Anmeldetag: 09.11.2010
(51) Int. Cl.: B65G 53/58

(54) **VORRICHTUNG ZUR EINSPEISUNG EINES FLUIDS IN EINE FESTSTOFFFÖRDERLEITUNG**
DEVICE FOR FEEDING A FLUID INTO A SOLID-CONVEYING LINE
DISPOSITIF D'INTRODUCTION D'UN FLUIDE DANS UNE CONDUITE DE TRANSPORT DE MATIÈRES SOLIDES

(30) Priorität: 09.12.2009 DE 102009057380
(43) Veröffentlichungstag der Anmeldung: 17.10.2012
(73) Patentinhaber: ThyssenKrupp Uhde GmbH, 44141 Dortmund (DE)
(72) Erfinder: HAMEL, Stefan, 57482 Wenden (DE); HACKER, Stefan, 44879 Bochum (DE)
(74) Vertreter: Meinke, Dabringhaus und Partner GbR
(86) Internationale Anmeldenummer: PCT/EP2010/006808
(87) Internationale Veröffentlichungsnummer: WO 2011/069588

(56) Entgegenhaltungen:
- DE-B- 1 263 658
- FR-A1- 2 203 762
- JP-A- 3 031 116
- US-A- 4 097 092

## Beschreibung

Die Erfindung richtet sich auf eine Vorrichtung zur Einspeisung eines Fluids, wie eines Gases oder einer Flüssigkeit, in eine Feststoffförderleitung, gemäß dem Oberbegriff des Anspruchs 1. Eine derartige Vorrichtung ist beipielsweise aus der FR 2203762 A bekannt.

Bei der EP 1 824 766 B1, ist die Feststoffförderleitung innerhalb eines, einen Ringraum bildenden Gehäuses aus einem permeablen Material gebildet und innerhalb des Gehäuses über beidseitige Ringdichtungen längsverschiebbar angeordnet. Um partikelförmige Feststoffe zu transportieren ist eine pneumatische Förderung bekannt. Je nach Strömungsregime und Förderdichte unterscheidet man grob in Dünnstrom- und in Dichtstromförderung. Zum Stand der Technik zählen dabei die US 3 152 839, US 1 152 302 oder die DD 0 154 599.

Die Dichtstromförderung zeichnet sich durch vergleichsweise geringen Fördergaseinsatz und eine sowohl den Feststoff als auch die Förderleitung schonende Betriebsweise aus und wird in einem weiten Anwendungsspektrum eingesetzt, wie beispielsweise zur Förderung von Staubkohlen, Flugaschen, Zement, aber auch in der Lebensmittel- und Pharmaindustrie, wobei die verfahrenstechnischen Parameter, um eine pneumatische Förderung im Dicht- oder auch im Dünnstrom durchzuführen, seit langem bekannt sind und mit zunehmenden Anforderungen an technische Systeme, wie Anlagenverfügbarkeit, Standzeiten, Investkosten, Wartungsfreundlichkeit etc., werden neuartige Lösungen gefordert, die diesen steigenden Anforderungen genügen.

Neben der bereits benannten EP 1 824 766 B1 gibt es noch andere Lösungen, die die Einspeisung von Gasen zur Feststoffförderung beschreiben, z.B. um den Feststoff zu Beginn oder auch während der Förderung zu fluidisieren, um Einfluss auf die Förderdichte zu nehmen oder um Rohrabschnitte zu spülen:

Zu diesem Stand der Technik gehört beispielsweise auch die Wo 2004/87331 A1, in der eine Anlage zur Förderung von pulverförmigem Material, insbesondere Pulverlacke, zu einer Sprühauftragsvorrichtung beschrieben wird. In dieser Vorrichtung wird ein doppelwandiges Rohrelement verwendet, das ebenfalls zur Lufteinfuhr in das Pulver mit einer permeablen Innenwand, bestehend aus Sintermetall, versehen ist. Das in der WO 2004/87331 A1 beschriebene doppelwandige Element sieht keine Dehnungsaufnahmen vor, sondern ist gemäß Beschreibung und Skizzen vollständig verschraubt unter Anwendung von Druckluft-Schlauchtechnik. Daher ist ein Einsatz im hier geplanten Betriebsbereich (hohe Temperaturen und hohe Drücke) nicht möglich und nicht übertragbar.

In der DE 1 269 571 wird ebenfalls ein doppelwandiges Rohr vorgestellt. Die innere Rohrwand ist aus porösem Werkstoff, wobei die Besonderheit darin besteht, dass das Material dehnbar und flexibel ist. Die aufgegebenen Druckstöße bewirken eine Bewegung der inneren Wand, durch die gleichzeitig ein Teil der Luft aufgrund der Porösität in den Feststoffstrom gelangt. Die beschriebene Porösität bei gleichzeitiger Flexibilität kann gleichzeitig nur durch Materialien, wie Kunststoffen, erfüllt werden. Damit ist eine Anwendung des Vorschlags der DE 1 269 571 im hier vorliegenden Fall bei Feststofftemperaturen von bis zu 400°C nicht anwendbar.

Weitere Lösungen zur Luftförderung bzw. Förderung mit einem unter Druck stehenden Fluid beschreiben die US 5 827 370 A oder die US 6 227 768 B.

Aufgabe der Erfindung ist es, eine Vorrichtung zur Förderung von z.B. staubförmigen Kohlen oder Flugasche in Vergasungsanlagen bei erhöhten Temperaturen vorzunehmen, bei hoher Leistung und hoher Betriebssicherheit.

Bei einer Vorrichtung der eingangs bezeichneten Art wird diese Aufgabe gemäß der Erfindung durch die kennzeichnenden Merkmale des Anspruchs 1 gelöst. Mit der Erfindung wird es möglich, da das in solchen Fällen in der Regel zugeführte Gas eine niedrigere Temperatur aufweist als und bis zu zum Teil erheblichen Temperaturdifferenzen zwischen feststoffführender und gaszuführender Seite, mit den sich daraus ergebenden unterschiedlichen Ausdehnungen der Komponenten, eine Kompensation der Dehnungsdifferenzen bereit zu stellen, um langfristig die Beschädigung entsprechender Elemente zu verhindern.

Mit der Erfindung wird noch ein weiteres Problem gelöst, das sich dadurch ergibt, dass in der Regel feststofffördernde Bauteile zyklisch beaufschlagt werden aufgrund von in Vergasungsanlagen herrschenden Drücken von bis zu 100 bar. Umgekehrt müssen im Prozess freigesetzte Feststoffe, wie Flugasche, ausgeschleust werden, wobei aus dem System hoher Druck auf atmosphärische Bedingungen ausgeschleust wird. Auch dies geschieht in zyklisch arbeitenden Schleussystemen, d.h. zu den Temperaturdifferenzen aufgrund der unterschiedlichen Medientemperaturen treten noch zeitliche Temperaturgradienten, die aus der zyklischen Betriebsweise herrühren. Durch die besondere Bauart der erfindungsgemäßen Vorrichtung wird diesen Problemen noch Rechnung getragen.

Ausgestaltungen der Erfindung ergeben sich aus den Unteransprüchen. Erfindungsgemäß ist vorgesehen, dass der Bereich des inneren Führungsrohres im Ringraum wenigstens teilweise perforiert ausgebildet ist. Mit dieser Konstruktion wird die Zuführung des Fördergases in Bereiche der Feststoffförderleitung ebenso gewährleistet, wie durch den Ringspalt am Ende des inneren Führungsrohres im Ringraum.

Um ein gegebenenfalls notwendiges Freiblasen von rückgerieselten Feststoffen bei zyklischer Betriebsweise zu erleichtern, ist der Ringraum im Bereich des Ringspaltes zur Feststoffförderleitung mit einem trichterförmigen Wandbereich ausgerüstet.

Zweckmäßig ist dass innere Führungsrohr über einen damit verbundenen Einlaßflansch an dem Gehäuse befestigt.

Weicht die Position der Vorrichtung von einer Ausrichtung in Schwerkraftrichtung ab, kann nach der Erfindung auch vorgesehen sein, dass die Zuführleitung zum Ringraum für das Fluid bei nicht in Schwerkraftrichtung positionierter Feststoffförderleitung im in Schwerkraftrichtung oberen Bereich des Ringraumes positioniert ist.

Weitere Merkmale, Einzelheiten und Vorteile der Erfindung ergeben sich aufgrund der nachfolgenden Beschreibung sowie anhand der Zeichnung, diese zeigt in
- Fig. 1: eine Vorrichtung im Schnitt,
- Fig. 2a-2d: Ausführungsformen der Feststoffförderleitung im Ringraum mit unterschiedlichen strömungsbeeinflussenden Elementen,
- Fig. 3: in der Darstellung gemäß Fig. 1 ein abgewandeltes Ausführungsbeispiel sowie in
- Fig. 4: ein Blockschaltbild mit angedeuteter erfindungsgemäßer Vorrichtung unterhalb eines Feststoffbehälters.

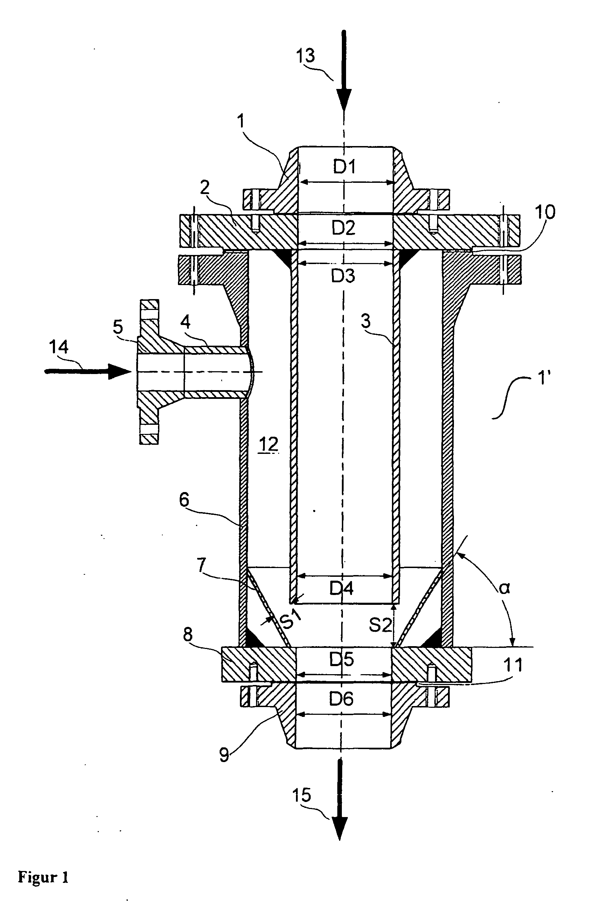

Die Figuren zeigen einzelne Merkmale der Vorrichtung, jedoch nicht die Kombination der Merkmale des Anspruchs 1. Das in Fig. 1 dargestellte Fluidisierrohr 1' bildet sich durch das Gehäuse 6, dem Einlassflansch 2, dem Auslassflansch 8 sowie dem Fluidisiermitteleintritt 4, welcher über den Flansch 5 mit einem Fluidisiermittelversorgungssystem verbunden wird. Das Fluidisierrohr wird über die Anschlussflansche 2 und 8 in die Feststoffförderleitung eingebaut. Die Abdichtung zwischen den Flanschen 2 und 8 und den Flanschen 1 und 9 der ankommenden bzw. abgehenden Feststoffförderleitung erfolgt über die Dichtringe 10 und 11. Das innere Führungsrohr 3 ist fest mit dem Einlassflansch 2 des Fluidisierrohres verbunden. Der zu fördernde Feststoff tritt über den Einlassflansch 2 in das innere Führungsrohr 3 ein. Idealerweise entspricht der Durchmesser der ankommenden Feststoffleitung D1 dem Durchmesser des Einlassflansches D2.

Der Einlassdurchmesser des inneren Führungsrohres D3 ist vorzugsweise gleich oder leicht größer dem Durchmesser D2 des Einlassflansches zu wählen, um Störungen der Feststoffströmung sowie das Auftreten von Verschleißkanten am Übergang zu vermeiden. Das Fluidisiermittel wird einem Ringraum 12, gebildet zwischen innerem Führungsrohr 3 und Gehäuse 6, über den Fluidisiermitteleintritt 4 zugeführt.

In Strömungsrichtung des Fluidisiermittels wird die Fluiddisiermittelverteilungskammer durch den Konus 7 und dem inneren Führungsrohr 3 eingeschnürt. Der so entstehende engste Strömungsquerschnitt S1 ist so zu wählen, dass die Fluidisiermittelgeschwindigkeit an dieser Stelle vorzugsweise das 1-bis 20-fache der Mindestfluidisiergeschwindigkeit W_{umf} des Feststoffs entspricht. Der Konuswinkel α ist vorzugsweise zwischen 45° und 80° zu wählen. Im Spalt S2 trifft das Fluidisiermittel auf den aus dem inneren Führungsrohr austretenden Feststoff. Gleichzeitig wird eine axiale Längendehnung des inneren Fluidisierrohrs 3 durch den Spalt S2 kompensiert. Die Fluidisierung erfolgt im Freiraum, gebildet aus dem inneren Führungsrohr 3 und dem Auslassflansch 8 im Spalt S2. Der Austritt aus dem Innenrohr D4 ist idealerweise kleiner oder gleich groß dem Durchmesser D4 der nachgeschalteten Förderleitung zu wählen, um keine Störkante der Feststoffströmung am Blockflansch 8 zu erzeugen. Sind die Durchmesser D3 und D4 unterschiedlich gewählt, so ist das innere Führungsrohr konisch -in Stromungsrichtung verjüngend- ausgeführt. Der fluidisierte Feststoff verlässt über den Feststoffaustritt 15 das Fluidisierrohr.

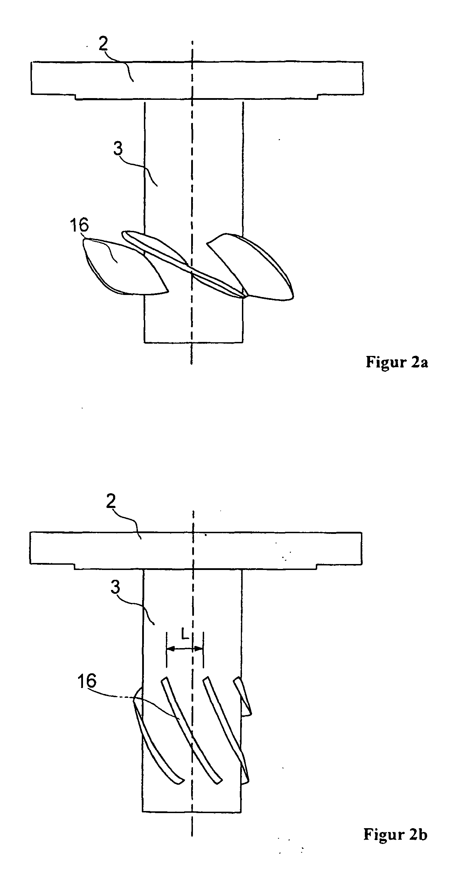

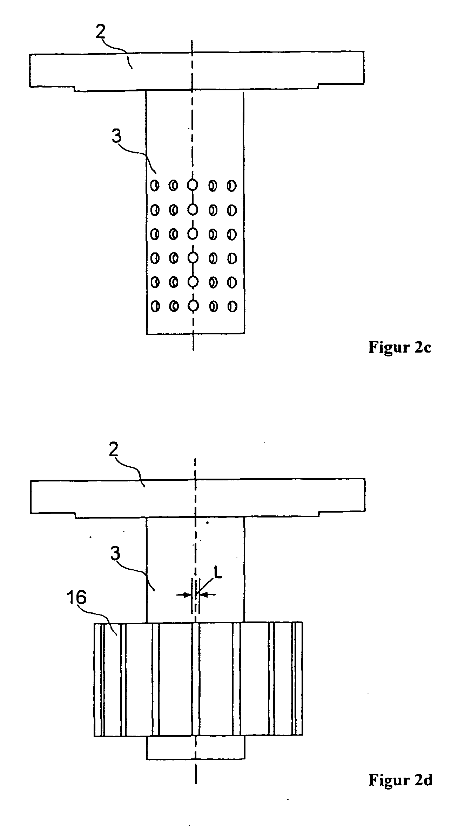

Die Fig. 2a, 2b, 2c und 2d zeigen verschiedene Ausführungsvarianten des Innenrohres 3. Das Innenrohr 3 ist fest mit dem Blockflansch 2 verbunden, so dass dieses Element komplett schnell und einfach wechselbar ist.

Fig. 2a und 2b zeigen beispielhaft zwei Möglichkeiten, durch aufgesetzte Strömungskörper 16 eine Drallströmung in der Fluidisiermittelverteilungskammer 12 zu erzeugen, so dass eine verbesserte Durchmischung des Fluidisiermittels mit dem Feststoff ermöglicht wird. Das Fluidisiermittel durchfließt die Fluidisiermittelverteilungskammer innerhalb der Strömungsspalten L zwischen den Strömungskörpern 16. Die entstehende Drallströmung verhindert z.B. die Bildung von Feststoffbrücken im Spalt S2.

Fig. 2c zeigt ein perforiertes inneres Führungsrohr 3, mit welchem der Feststoff bereits beim Durchfließen mit Fluidisiermittel beaufschlagt werden kann.

Fig. 2d zeigt einen nicht im RAhmen der Erfindung liegenden Strömungskörper 16, welcher als Ring mit Strömungsnuten ausgeführt ist. Dieser Strömungskörper hat definierte Strömungskanäle mit einer Strömungsspaltbreite L. Das Fluidisiermittel erfährt beim Durchströmen dieser Kanäle einen Druckverlust Δp (Strömungskörper), welcher in Relation zum Druckverlust der abgelagerten Feststoffmenge Δp (Feststoff) deutlich höher ist. Hierdurch wird eine gleichmäßige Fluidisiermittelverteilung in der Fluidisiermittelverteilungskammer 12 erzeugt und abgelagerter Feststoff durch das Fluidisiermittel entfernt.

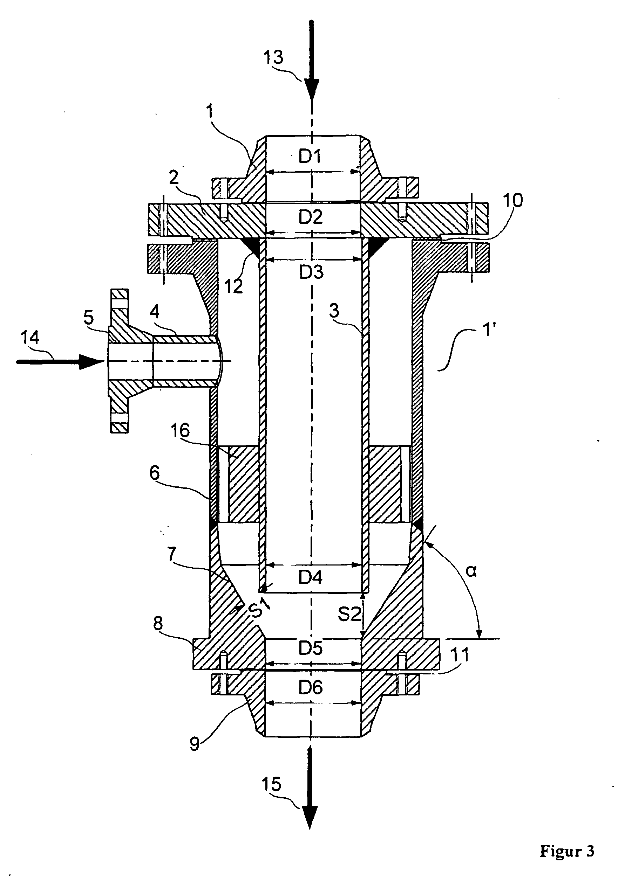

Fig. 3 zeigt ein nicht im Rahmen der Erfindung liegendes Fluidisierrohr 1', wobei Konus 7 und Auslassflansch 8 aus einem Bauteil bestehen, z.B. einem Drehteil. In Fig. 3 ist außerdem beispielhaft der Strömungskörper aus Fig. 2d dargestellt.

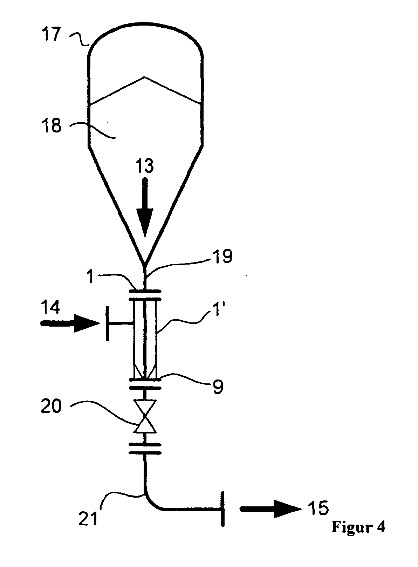

Fig. 4 zeigt den Fließbildausschnitt mit einem typischen Anwendungsfall für das erfindungsgemäße Fluidisierrohr 1'. Das Fluidisierrohr 1' ist an den zur Feststoffaustragung am Behälter 17 befindlichen Rohrauslauf 19 mittels Rohrflansch 1 befestigt. Der Behälter 17 dient beispielsweise zur Zwischenspeicherung von Feststoff oder als Schleuse zur Druckerhöhung des Feststoffstroms. Wird das Ventil 20 geöffnet, fließt der Feststoff aus dem Behälter 17 durch das Fluidisierrohr 1' und das Ventil 20 in die Feststoffförderleitung 21. Das Fluidisierrohr kann in der vereinfacht dargestellten Verschaltung verschiedentlich angewendet werden.

Eine Anwendung ist, dass kurz bevor das Ventil 20 öffnet, um den Feststofftransport einzuleiten, Gas 14 in der Menge zugeführt wird, so dass oberhalb des Ventils 20 eine lokale Fluidisierung einsetzt. Auf diese Weise ist der Schaltvorgang vereinfacht, gleichzeitig wird durch die Fluidisierung der Feststoff aufgelockert, so dass möglicherweise entstandene Feststoffbrücken eliminiert werden.

Eine weitere Anwendung bzw. ein weiterer Betriebszustand ist, dass während des Feststofffördervorgangs das zugeführte Gas 14 auf die Menge eingestellt wird, die notwendig ist, um beispielsweise die für die sichere Dichtstromförderung notwendige Dichte einzustellen. Ist die Feststoffförderung abgeschlossen, also der Behälter leer, kann die Leitung durch eine erhöhte Menge an Gas 14 gespült werden. Da zum Beispiel für die erste Fluidisierung, aber auch die abschließende Spülung kurzzeitig große Gasmengen benötigt werden, ist die Verwendung von Sintermetallen hier problematisch. Hier bietet die erfindungsgemäße Vorrichtung mit Gaszufuhrspalt S1 verfahrenstechnische Vorteile in Verbindung mit höherer Lebenserwartung gegenüber der Lösung mit Sintermetallen.

### Bezugszeichenliste:

- 1': Fluidisierrohr
- 1: Rohrleitungsflansch
- 2: Einlassflansch Fluidisierrohr
- 3: Inneres Führungsrohr
- 4: Fluidisiermitteleintritt
- 5: Flansch
- 6: Gehäuse
- 7: Konus
- 8: Auslassflansch Fluidisierrohr
- 9: Rohrleitungsflansch
- 10/11: Dichtring
- 12: Ringraum
- 13: Feststoffeintritt
- 14: Fluidisiermittelzufuhr
- 15: Feststoffaustritt
- 16: Strömungskörper
- 17: Behälter
- 18: Feststoffschüttung
- 19: Rohrauslauf
- 20: Ventil
- 21: Feststoffförderleitung

- D1: Durchmesser Rohrleitung
- D2: Durchmesser Feststoffeinlass
- D3: Durchmesser Einlass inneres Führungsrohr
- D4: Durchmesser Auslass inneres Führungsrohr
- D5: Durchmesser Fluidisierrohrauslass
- D6: Durchmesser Rohrleitung
- S1: Engster Querschnitt Fluidisierring
- S2: Dehnungsspalt
- α: Konuswinkel
- L: Strömungsspalt

## Patentansprüche

1. Vorrichtung zur Einspeisung eines Fluids, wie eines Gases oder einer Flüssigkeit, in eine Feststoffförderleitung, mit einem inneren Führungsrohr (3), einem Gehäuse (6), einem zwischen dem inneren Führrungsrohr (3) und dem Gehäuse (6) gebildeten Ringraum (12) und einer Zuführleitung (4) zum Ringraum (12) für das Fluid, wobei das Fluid zunächst in den das innere Führungsrohr (3) umgebenden Ringraum (12) und von dort in die Feststoffförderleitung geführt wird,
wobei das innere Führungsrohr (3) im Ringraum (12) zur Bildung eines Ringspaltes kürzer ist als die Länge des Ringraumes, und wobei im Ringraum (12) Strömungsleitende Einbauten (6) zur Drallerzeugung des eingebrachten Fluids vorgesehen sind, **dadurch gekennzeichnet, dass** der Bereich des inneren Führungsrohres (3) im Ringraum (12) wenigstens teilweise perforiert ausgebildet ist.

2. Vorrichtung nach Anspruch 1,
**dadurch gekennzeichnet,**
**dass** der Ringraum (12) im Bereich des Ringspaltes zum inneren Führungsrohr (3) mit einem trichterförmigen Wandbereich (7) ausgerüstet ist.

3. Vorrichtung nach einem der vorangehenden Ansprüche,
**dadurch gekennzeichnet,**
**dass** das innere Führungsrohr (3) über einem fest damit verbundenen Einlaßflansch (2) an dem Gehäuse (6) befestigt ist.

4. Vorrichtung nach einem der vorangehenden Ansprüche,
**dadurch gekennzeichnet,**
**dass** die Zuführleitung (4) zum Ringraum (12) für das Fluid bei nicht in Schwerkraftrichtung positionierter Feststoffförderleitung im in Schwerkraftrichtung oberen Bereich des Ringraumes (12) positioniert ist.

## Claims

1. Device for feeding a fluid, such as a gas or a liquid, into a solid-conveying line, said device comprising an inner guide tube (3), a housing (6), an annulus (12) formed between the inner guide tube (3) and the housing (6), and comprising a feed line (4) to the annulus (12) for the fluid, the fluid first being guided into the annulus (12) that surrounds the guide tube (3), and from there into the solid-conveying line, the inner guide tube (3) being shorter, in the annulus (12) for forming an annular gap, than the length of the annulus, and flow-conducting components (16) for generating a vortex flow of the fluid that is introduced being provided in the annulus (12), **characterised in that** the region of the inner guide tube (3) is configured to be perforated at least in part in the annulus (12).

2. Device according to claim 1, **characterised in that** the annulus (12) is equipped with a funnel-shaped wall region (7) in the region of the annular gap to the inner guide tube (3).

3. Device according to any of the preceding claims, **characterised in that** the inner guide tube (3) is attached to the housing (6) via an inlet flange (2) which is rigidly connected thereto.

4. Device according to any of the preceding claims, **characterised in that** the feed line (4) to the annulus (12) for the fluid is positioned in the upper region, in the direction of gravity, of the annulus (12) if the solid-conveying line is not positioned in the direction of gravity.

## Revendications

1. Dispositif d'introduction d'un fluide, tel qu'un gaz ou un liquide, dans une conduite de transport de matières solides, comprenant un tube de guidage interne (3), un boîtier (6), un espace annulaire (12) formé entre le tube de guidage interne (3) et le boîtier (6) et une conduite d'acheminement (4) à l'espace annulaire (12) pour le fluide, dans lequel le fluide est guidé tout d'abord dans l'espace annulaire (12) entourant le tube de guidage interne (3) et, de là, dans la conduite de transport de matières solides, dans lequel le tube de guidage interne (3) est plus court dans l'espace annulaire (12) que la longueur de l'espace annulaire pour former un intervalle annulaire et dans lequel il est prévu des éléments encastrés (16) acheminant le flux dans l'espace annulaire (12) pour y susciter la rotation du fluide introduit, **caractérisé en ce que** la zone du tube de guidage interne (3) est conformée dans l'espace annulaire (12) au moins en partie avec des perforations.

2. Dispositif selon la revendication 1,
**caractérisé en ce que** :
l'espace annulaire (12) est équipé, dans la zone de l'intervalle annulaire avec le tube de guidage interne (3), d'une zone de paroi en forme d'entonnoir (7).

3. Dispositif selon l'une quelconque des revendications précédentes,
**caractérisé en ce que** :
le tube de guidage interne (3) est fixé au boîtier (6) via une bride d'admission (2) qui lui est solidement raccordée.

4. Dispositif selon l'une quelconque des revendications précédentes,
**caractérisé en ce que** :
la conduite d'acheminement (4) à l'espace annulaire (12) pour le fluide, dans le cas où la conduite de transport de matières solides n'est pas positionnée dans le sens de la pesanteur, est positionnée dans là zone supérieure de l'espace annulaire (12) dans le sens de la pesanteur.
